# EUROPEAN PATENT SPECIFICATION

(11) **EP 2 222 060 B1**
(45) Date of publication and mention of the grant of the patent: **23.05.2012**
(21) Application number: 09153309.1
(22) Date of filing: 20.02.2009
(51) Int. Cl.: H04M 1/57, H04M 1/725, G08B 6/00, H04M 19/04

(54) **Method and apparatus for managing message notifications**
Verfahren und Vorrichtung zur Verwaltung von Mitteilungsbenachrichtigungen
Procédé et appareil pour la gestion de notifications de messages

(43) Date of publication of application: 25.08.2010
(73) Proprietor: Research In Motion Limited, Waterloo, ON N2L 3W8 (CA)
(72) Inventor: Storozuk, John, Waterloo Ontario N2L 3L3 (CA)
(74) Representative: MERH-IP Matias Erny Reichl Hoffmann

(56) References cited:
- EP-A2- 1 100 060
- WO-A1-2004/071113
- WO-A1-2005/064895
- US-B1- 6 344 795

## Description

The specification relates generally to message notifications, and specifically to a method and apparatus for managing message notifications in a portable electronic device.

As the use of hand-held communication devices such as smart telephones and cellular telephones continues to grow, so too does the potential for disruptive notifications from such devices. For example, a ring tone sounding during a meeting or conversation is disruptive to all those involved in the meeting or conversation. Under various prior art approaches, ring tones may be replaced by vibration alerts to reduce the likelihood of a call notification being disruptive. Vibration alerts, however, may not help to identify the source of the incoming call or other communication. Such identification may still disadvantageously require a visual inspection of the device, which can be inconvenient and embarrassing, and may in fact be impossible, for example in the case of a visually impaired user.
[0002a] EP1100060A2 describes a skin-contact type terminal system which includes a thermoelectric module for cooling down or heating. WO2005/064895A1 describes a system for pushing a sender-personalized notification.

### GENERAL

In one preferred embodiment there may be provided a method of managing message notifications in a portable electronic device having a thermal notifier output device, the method comprising: receiving a message at the portable electronic device; determining a notification setting responsive to receiving the message; and generating a thermal notification signal at the thermal notifier output device according to the determined notification setting, wherein the thermal notification signal provides non-visual identification of an originator of the received message.

In another preferred embodiment there may be provided a portable electronic device comprising: a network interface; a thermal notifier output device; and a processor interconnected with the network interface and the thermal notifier output device, the processor configured to receive a message at the portable electronic device; to determine a notification setting responsive to receiving the message; and to generate a thermal notification signal at the thermal notifier output device according to the determined notification setting, wherein the thermal notification signal provides non-visual identification of an originator of the received message.

In yet another preferred embodiment there may be provided a computer readable storage medium storing computer readable programming instructions executable by a processor of an electronic device for causing the electronic device to implement the steps of the method described herein.

### BRIEF DESCRIPTIONS OF THE DRAWINGS

Embodiments are described with reference to the following figures, in which:

Fig. 1 depicts a schematic representation of a portable electronic device, according to a non-limiting embodiment;

Fig. 2 depicts a schematic representation of the reverse side of the portable electronic device of Fig. 1, according to a non-limiting embodiment;

Fig. 3 depicts a schematic block diagram showing various internal components of the portable electronic device of Fig. 1, according to a non-limiting embodiment;

Fig. 4 depicts a method for managing message notifications in the portable electronic device of Fig. 1, according to a non-limiting embodiment;

Fig. 5 depicts a schematic representation of a contacts database maintained at the portable electronic device of Fig. 1, according to a non-limiting embodiment; and

Fig. 6 depicts a schematic representation of a notification setting maintained at the portable electronic device of Fig. 1, according to a non-limiting embodiment

### DESCRIPTION OF PREFERRED EMBODIMENTS

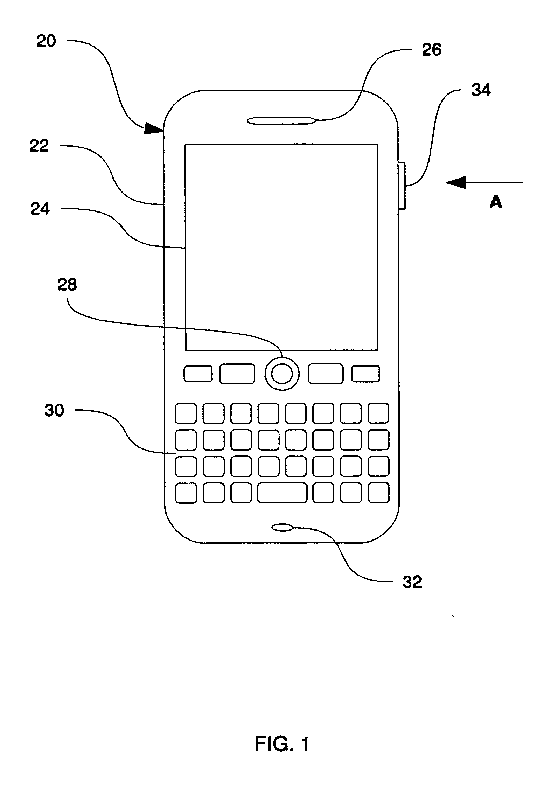

Referring now to Figure 1, a schematic representation of a computing device in the form of a portable electronic device is indicated generally at 20. In the present embodiment, portable electronic device 20 is based on the computing environment and functionality of a hand-held wireless communication device. It will be understood, however, that portable electronic device 20 is not limited to a hand-held wireless communication device. Various electronic devices are possible, such as cellular telephones, smart telephones, and laptop computers. Referring again to Figure 1, portable electronic device 20 includes a housing 22, a plurality of output devices and a plurality of input devices. Housing 22 is constructed of a suitable material, as will occur to those skilled in the art. In a present embodiment, the output devices of portable electronic device 20 include a display 24 framed by housing 22. Display 24 may be, for example, an LCD display, and may also be combined with or implemented as a touch screen. Portable electronic device 20 also includes a further output device in the form of a speaker 26. In a present embodiment, the input devices of portable electronic device 20 include a pointing device 28 in the form of a trackball. It will be understood that in some embodiments, pointing device 28 may also comprise a touch screen integrated with display 24. The input devices of portable electronic device 20 can also include a keypad 30, a microphone 32 and an exit key 34 (which can be depressed in the direction of arrow "A").

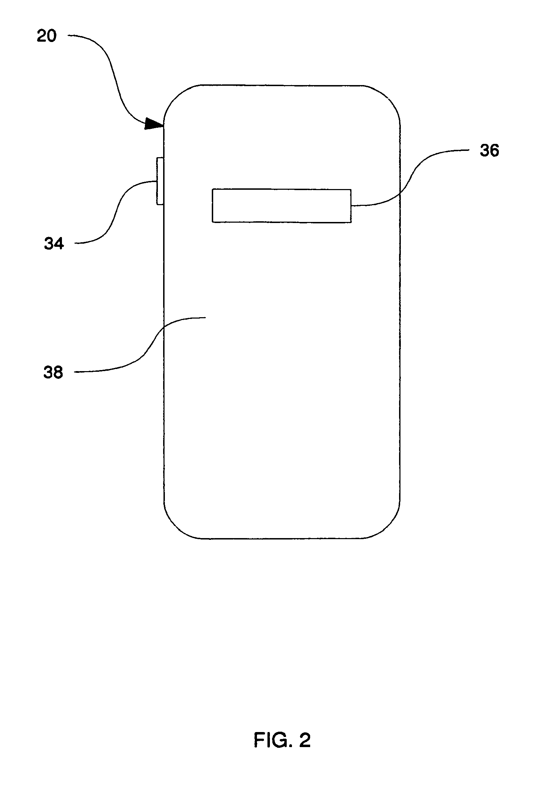

With reference now to Figure 2, a schematic representation of the reverse side of portable electronic device 20 as shown in Figure 1 is depicted. In addition to exit key 34 and other input and output devices as described above, portable electronic device 20 includes a further output device in the form of a thermal notifier 36. Thermal notifier 36 provides non-visual identification of an originator of a message received at portable electronic device 20, as will be described in further detail below.

In a present embodiment, a surface of thermal notifier 36 is substantially flush with an exterior surface 38 of the reverse side of housing 22 of portable electronic device 20. Thermal notifier 36 thus occupies a portion of the external surface of portable electronic device 20. Thermal notifier 36 can be a strip of thermally conductive material, as will occur to those skilled in the art. In other embodiments (not shown), the size and placement of thermal identifier 36 may be varied, and multiple thermal identifiers 36 may be provided. As will be described in further detail below, in a present embodiment the termperature of thermal notifier 36 can be biased above ambient temperature to generate a "Hot" thermal notification signal and below ambient temperature to generate a "Cold" thermal notification signal. In the absence of bias, the temperature of thermal notifier 36 remains substantially equal to ambient temperature, and a "Neutral" thermal notification signal is generated. It will be appreciated that the "Neutral" thermal notification signal is equivalent to the absence of a thermal notification signal. If a bias is applied and then removed, the temperature of thermal notifier 36 returns from a hotter-than-ambient or colder-than-ambient temperature to substantially ambient temperature.

It will now be apparent to those skilled in the art that various bias mechanisms may be used to bias the temperature of thermal notifier 36 in order to generate the above "Hot," and "Cold" thermal notification signals. For example, in some embodiments exothermic and endothermic chemical reactions can be used. Exothermic reactions can conduct heat to thermal notifier 36, thereby increasing the temperature of thermal notifier 36. Endothermic reactions may draw heat from thermal notifier 36, thereby decreasing the temperature of thermal notifier 36. In such embodiments, removeable cartridges (not shown) containing necessary reagents for the above-mentioned reactions can be provided within housing 22 of portable electronic device 20. In a present embodiment, the temperature of thermal notifier 36 is biased as described above by way of resistive heating and thermoelectric cooling.

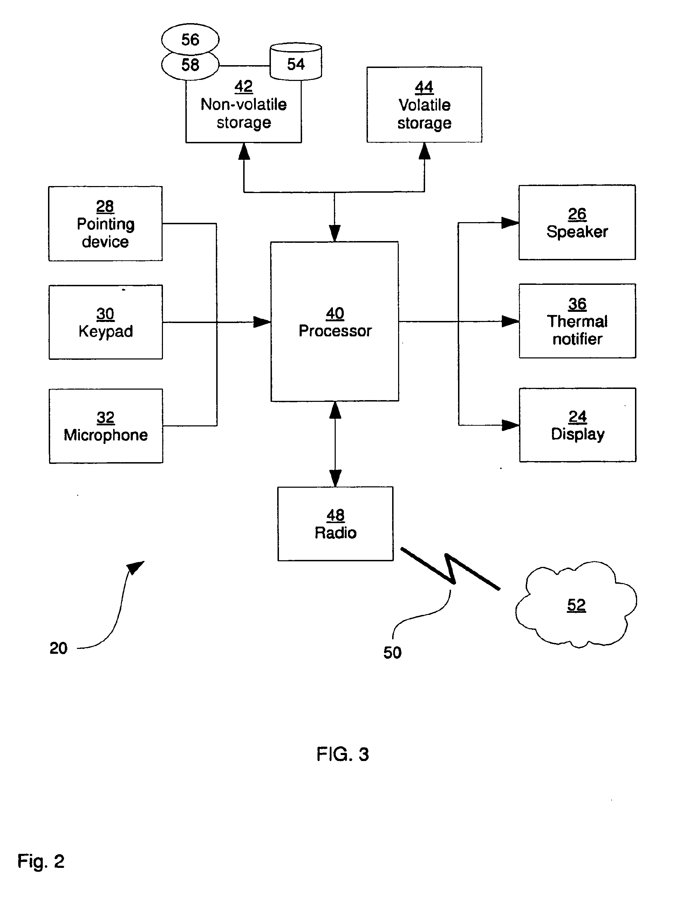

Referring now to Figure 3, a schematic block diagram shows portable electronic device 20 in greater detail. It will be understood that the structure in Figure 3 is purely exemplary, and contemplates a device that may be used for both wireless voice (e.g. telephony) and wireless data (e.g. email, web browsing, text) communications. Portable electronic device 20 includes input devices such as pointing device 28, keypad 30 and microphone 32. Other input devices, such as a camera lens and associated image sensor (not shown), are also contemplated. Portable electronic device 20 is based on a microcomputer that includes a processor 40. Input from pointing device 28, keypad 30 and microphone 32 can be received at processor 40. Processor 40, in turn, communicates with a non-volatile storage unit 42 (e.g. read only memory ("ROM"), Electrically Eraseable Programmable Read Only Memory ("EEPROM"), flash memory) and a volatile storage unit 44 (e.g. Random Access Memory ("RAM")). Processor 40 also communicates with output devices such as display 24, speaker 26 and thermal notifier 36, and can thus cause the output devices to provide various output signals.

Portable electronic device 20 also includes a network interface such as a radio 48 communicating with processor 40. Radio 48 provides wireless communication capabilities to portable electronic device 20 by way of a wireless link 50 connecting portable electronic device 20 to a network 52. Link 50 between portable electronic device 20 and network 52 may be based in a present embodiment on core mobile network infrastructure (e.g. Global System for Mobile communications ("GSM"); Code Division Multiple Access ("CDMA"); CDMA 2000; 3G; 4G). Link 50 may also be based on wireless local area network ("WLAN") infrastructures such as the Institute for Electrical and Electronic Engineers ("IEEE") 802.11 Standard (and its variants), Bluetooth or the like, or hybrids thereof. Note that in an exemplary variation of portable electronic device 20, link 50 may also be a wired connection and radio 48 may be a network interface capable of receiving and communicating over the wired connection.

Programming instructions that implement the functional teachings of portable electronic device 20 as described herein are typically maintained in a computer readable storage medium such as non-volatile storage unit 42. The programming instructions are used by processor 40, which makes appropriate utilization of volatile storage unit 44 during the execution of such programming instructions. Non-volatile storage unit 42 persistently maintains a contacts database 54, a messaging application 56 and a profile application 58. Messaging application 56 and profile application 58 can be executed on processor 40, making use of non-volatile storage unit 42 and volatile storage unit 44 as appropriate. It will be understood that either or both of messaging application 56 and profile application 58 may be integrated with other applications that will occur to those skilled in the art according to the desired configuration and functioning of portable electronic device 20.

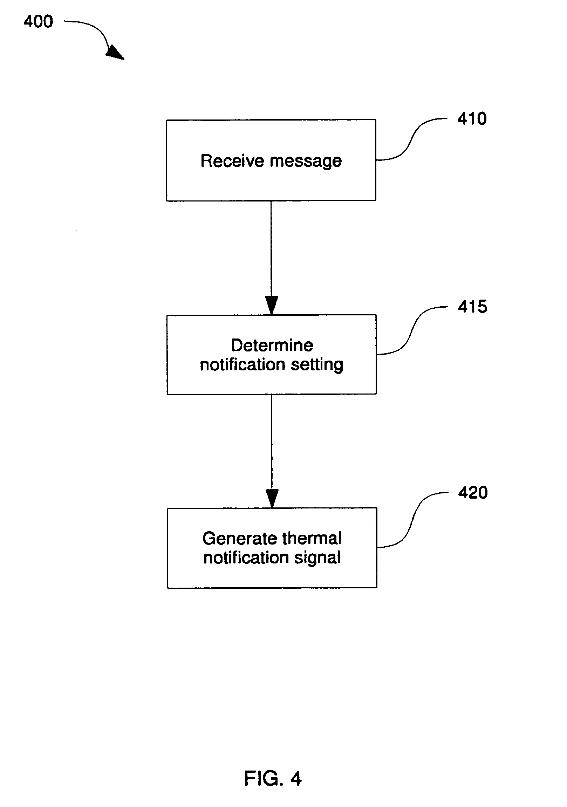

Referring now to Figure 4, a flowchart is provided depicted a method, indicated generally at 400, for managing message notifications in a portable electronic device. Method 400 will be described in conjunction with its exemplary performance on portable electronic device 20, but it will be understood that portable electronic device 20 and method 400 may both be varied and that those variations are within the scope of the present teachings.

Method 400 begins at block 410 with the receipt of a message at portable electronic device 20. A message as used herein may be any of a variety of communications. For example, in a present embodiment, the message may be an incoming voice call. In other embodiments, the message may be a text message, an email or the like. It will now be apparent that message application 56, in other embodiments, can be replaced by multiple applications, each directed to the processing of different types of communications. Continuing with the present exemplary performance of method 400, processor 40 of portable electronic device 20 is configured, via execution of message application 56, to communicate with radio 48 to receive the message at block 410 from network 52 (via link 50).

In a present embodiment, block 410 of method 400 also includes the receipt of an originator identifier for the message. The originator identifier, in a present embodiment, is a telephone number of an entity from which the received message originated. It will now be apparent that other originator identifiers are also suitable. The received originator identifier can be used, as will be described in further detail below, to search contacts database 54. For the present exemplary performance of method 400, the originator identifier received at block 410 is "555-5552."

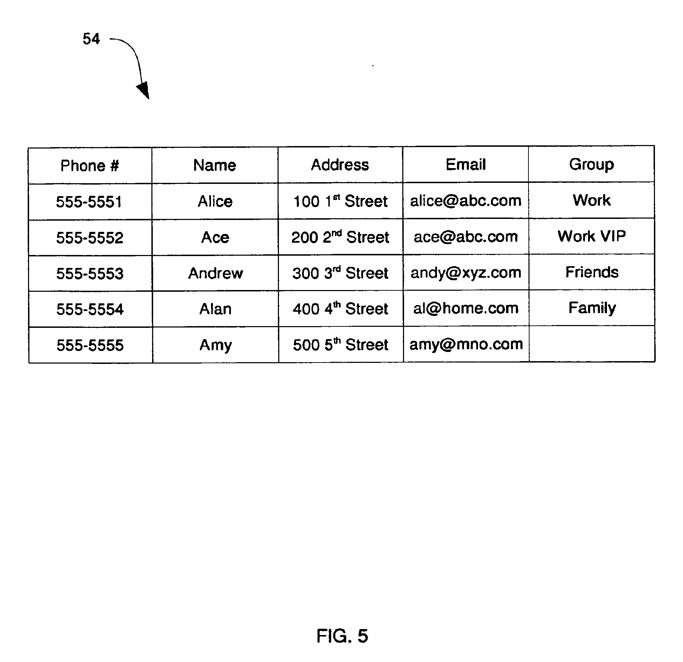

An exemplary contacts database 54 is shown in Figure 5. Contacts database 54 contains information relating to various people and/or entities. It will be understood that the columns of contacts database 54 shown in Figure 5 are purely exemplary, and that other configurations of contacts database 54 may also occur to those skilled in the art. Of particular note, contacts database 54 includes a "Phone #" column and a "Group" column. The "Phone #" column contains an originator identifier in the form of a telephone number for each contact. It will be noted that the "Email" column contains another type of originator identifier in the form of an email address. The "Group" column contains an indication of which group of contacts a given contact falls into. For example, the contact named "Alice" has been placed within the "Work" group. The contact named "Ace" has been placed within the "Work VIP" group. This can indicate that messages received from Ace are of a different priority than messages received from Alice. It will now be apparent that many configurations exist for contacts database 54 and that many combinations of groups may be used to organize contacts within contacts database 54. In other embodiments (not shown), the "Group" column may be omitted from contacts database 54 and instead stored in portable electronic device 20 as a separate database.

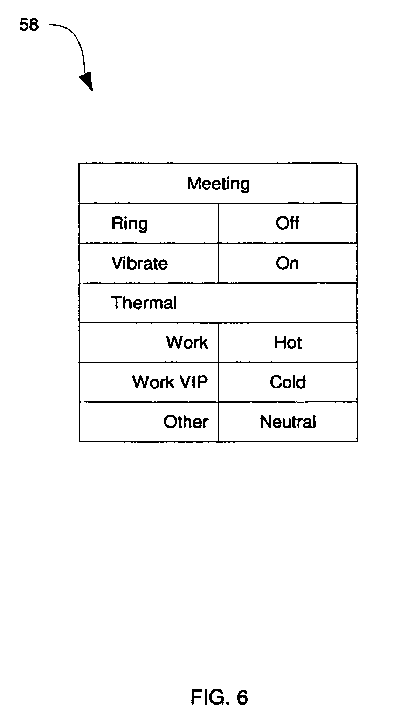

Referring back to Figure 4, method 400 continues at block 415. At block 415, a notification setting is determined in response to the receipt of a message and originator identifier at block 410. At block 415, processor 40 is configured, via execution of profile application 58, to determine a currently active notification setting for the message received at block 410. Profile application 58 can maintain a plurality of notification settings, any one of which may be the active notification setting at a given time. An exemplary notification setting is represented schematically in Figure 6. Figure 6 shows a "Meeting" notification setting maintained at portable electronic device 20 by profile application 58. The "Meeting" notification setting includes an indication that the audible "Ring" notification signal generated, for example, by speaker 26 of portable electronic device 20, is "Off" (disabled). The "Meeting" notification setting further includes an indication that the "Vibration" notification signal is "On" (enabled). Of particular note, the notification setting contains indications of various thermal notification signals to be generated by thermal notifier 36. In a present embodiment as depicted in Figure 6, the "Hot" thermal notification signal is indicated for messages received from contacts associated with the "Work" group. Similarly, the "Cold" thermal notification signal is indicated for messages received from contacts associated with the "Work VIP" group, and the "Neutral" thermal notification signal is indicated for all other contacts (that is, contacts belonging to other groups or belonging to no group). As noted above, the "Neutral" indication may instead be replaced with an "Off" or "Not Applicable" indication, as the "Neutral" thermal notification signal in fact represents a lack of thermal notification signal.

It will now be apparent to those skilled in the art that many variations may be made to the notification settings of profile application 58. For example, additional settings (such as ring volume and ring tone, as well as vibration frequency and length) may be included in each notification setting. Further, the indicated thermal notification signal may be varied. For example, an indication may be provided for contacts belonging to no groups but appearing in contact database 54, while a separate indication may be provided for contacts not appearing in contact database 54. These and other variations are within the scope of the present teachings.

Returning to Figure 4, for the present exemplary performance of method 400, the "Meeting" notification setting is the active notification setting. Thus, at block 415 of method 400, processor 40 of portable electronic device is configured, via execution of profile application 58, to determine the "Meeting" notification setting.

Method 400 continues with the performance of block 420. At block 420, a thermal notification signal is generated at thermal notifier 36 according to the notification setting determined at block 415 and the originator identifier received at block 410. Processor 40 of portable electronic device 20 is configured to search contacts database 54, via execution of messaging application 56, for entries matching the originator identifier received at block 410. As seen in Figure 5, the originator identifier "555-5552" received at block 410 matches the second entry of contacts database 54, corresponding to the contact named "Ace." It will be noted that the contact "Ace" is assigned to the group "Work VIP." Processor 40 or portable electronic device 20 is therefore configured to cause thermal notifier 36 to generate a thermal notification signal corresponding to the thermal notification signal associated with the "Work VIP" group in the active notification setting (the "Meeting" notification setting). Thus, in the present exemplary performance of method 400, processor 40 causes thermal notifier 36 to generate the "Cold" thermal notification signal in response to the message received at block 410.

In order to generate the "Cold" thermal notification signal, processor 40 of portable electronic device 20 is configured to apply a bias to reduce the temperature of at least a portion of thermal notifier 36 below ambient temperature. It will now be appreciated that in other performances of method 400, processor 40 may instead cause the temperature of at least a portion of thermal notifier to increase (corresponding to the "Hot" thermal notification signal), or to remain substantially unchanged (corresponding to the "Neutral," or lack of, thermal notification signal). It will also be appreciated that the terms "increase" and "decrease" used above are merely for explanatory purposes. The various thermal notification signals may be assoicated with specific temperatures, or may be associated with increments above or below current ambient temperature. In some embodiments (not shown), portable electronic device 20 can thus include an additional input device in the form of a temperature sensor to determine the ambient temperature.

In a present embodiment, the thermal notification signal generated at block 420 of method 400 is maintained for a predetermined amount of time, after which the temperature of thermal notifier 36 returns substantially to ambient temperature. In other embodiments (not shown), the predetermined amount of time may be set for each notification setting maintained by profile application 58.

Although the embodiments described herein provide "Hot" and "Cold" thermal notification signals, it will now be apparent that additional thermal notification signals may also be provided and generated at thermal notifier 36. Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method of managing message notifications in a portable electronic device (20) having a thermal notifier output device (36), the method comprising:
maintaining a plurality of notification settings (58) in the portable electronic device;
receiving a message (410) at the portable electronic device (20);
determining, responsive to receiving the message, a notification setting (415) from among the plurality of notification settings;
generating a thermal notification signal (420) at the thermal notifier output device (36) according to the determined notification setting, wherein the thermal notification signal provides non-visual identification of an originator of the received message; and
generating at least one other notification signal according to the determined notification setting.

2. The method of claim 1, wherein the thermal notifier output device (36) occupies a portion of an external surface (38) of the portable electronic device (20).

3. The method of any one of claims 1 to 2, wherein the thermal notification signal comprises:
increasing the temperature of at least a portion of the thermal notifier output device (36) above an ambient temperature; or
decreasing the temperature of at least a portion of the thermal notifier output device (36) below an ambient temperature.

4. The method of any one of claims 1 to 3, further comprising:
receiving (410), prior to generating the thermal notification signal, an originator identifier associated with the message.

5. The method of claim 4, comprising generating the thermal notification signal at the thermal notifier output device according to the determined notification setting and the originator identifier.

6. The method of any one of claims 1 to 5, further comprising:
ceasing generation of the thermal notification signal after a predetermined time period.

7. A portable electronic device (20) comprising:
a network interface (48);
a storage unit (42, 44) configured to maintain a plurality of notification settings (58);
a thermal notifier output device (36); and
a processor (40) interconnected with the network interface (48), the storage unit (42, 44) and the thermal notifier output device (36), the processor (40) configured to receive a message (410) at the portable electronic device (20); to determine, responsive to receiving the message, a notification setting (415) from among the plurality of notification settings; to generate a thermal notification signal (420) at the thermal notifier output device (36) according to the determined notification setting, wherein the thermal notification signal provides non-visual identification of an originator of the received message; and to generate at least one other notification signal according to the determined notification setting.

8. The portable electronic device (20) of claim 7, wherein the thermal notifier output device (36) occupies a portion of an external surface (38) of the portable electronic device (20).

9. The portable electronic device (20) of any one of claims 7 to 8 wherein the thermal notification signal comprises:
increasing the temperature of at least a portion of the thermal notifier output device (36) above an ambient temperature; or
decreasing the temperature of at least a portion of the thermal notifier output device (36) below an ambient temperature.

10. The portable electronic device (20) of any one of claims 7 to 9, wherein the processor (40) is further configured to receive (410), prior to generating the thermal notification signal, an originator identifier associated with the message.

11. The portable electronic device (20) of claim 10, wherein the processor (40) is further configured to generate the thermal notification signal at the thermal notifier output device (36) according to the determined notification setting and the originator identifier.

12. The portable electronic device (20) of any one of claims 7 to 11, wherein the processor (40) is further configured to cease generation of the thermal notification signal after a predetermined time period.

13. A computer readable storage medium (42, 44) storing computer readable programming instructions executable by a processor (40) of an electronic device (20) for causing the electronic device to implement the steps of the method of any one of claims 1 to 6.

## Patentansprüche

1. Verfahren zum Verwalten von Nachrichtenbenachrichtigungen in einer tragbaren elektronischen Vorrichtung (20), die eine thermische Benachrichtiger-Ausgabevorrichtung (36) hat, wobei das Vorfahren aufweist:
Führen einer Vielzahl von Benachrichtigungsseinstellungen (58) in der tragbaren elektronischen Vorrichtung;
Empfangen einer Nachricht (410) an der tragbaren elektronischen Vorrichtung (20);
Bestimmen, in Reaktion auf das Empfangen der Nachricht, einer Benachrichtigungseinstellung (415) aus der Vielzahl von
Benachrichtigungsseinstellungen;
Erzeugen eines thermischen Benachrichtigungssignals (420) an der thermischen Benachrichtiger-Ausgabevorrichtung (36) gemäß der bestimmten Benachrichtigungseinstellung, wobei das thermische Benachrichtigungssignal eine nicht-visuelle Identifizierung eines Absenders der empfangenen Nachricht vorsieht; und
Erzeugen zumindest eines anderen Benachrichtigungssignals gemäß der bestimmten Benachrichtigungseinstellung.

2. Verfahren gemäß Anspruch 1, wobei die thermische Benachrichtiger-Ausgabevorrichtung (36) einen Teil einer externen Oberfläche (38) der tragbaren elektronischen Vorrichtung (20) einnimmt.

3. Verfahren gemäß einem der Ansprüche 1 bis 2, wobei das thermische Benachrichtigungssignal aufweist:
Erhöhen der Temperatur von zumindest einem Teil der thermischen Benachrichtiger-Ausgabevorrichtung (36) über eine Umgebungstemperatur;
oder
Vorringern der Temperatur von zumindest einem Teil der thermischen Benachrichtiger-Ausgabevorrichtung (36) unter eine Umgebungstemperatur.

4. Verfahren gemäß einem der Ansprüche 1 bis 3, das weiter aufweist:
Empfangen (410), vor dem Erzeugen des thermischen Benachrichtigungssignals, eines Absender-Identifizierers, der mit der Nachricht assoziiert ist.

5. Verfahren gemäß Anspruch 4, das aufweist ein Erzeugen des thermischen Benachrichtigungssignals an der thermischen Benachrichtiger-Ausgabevorrichtung gemäß der bestimmten Benachrichtigungseinstellung und dem Absender-Identifizierer.

6. Verfahren gemäß einem der Ansprüche 1 bis 5, das weiter aufweist:
Beenden eines Erzeugens des thermischen Benachrichtigungssignals nach einer vorgegebenen Zeitdauer.

7. Tragbare elektronische Vorrichtung (20), die aufweist:
eine Netzwerkschnittstelle (48);
eine Speichereinheit (42, 44), die konfiguriert ist zum Führen einer Vielzahl von Benachrichtigungsseinstellungen (58);
eine thermische Benachrichtiger-Ausgabevorrichtung (36); und
einen Prozessor (40), der mit der Netzwerkschnittstelle (48), der Speichereinheit (42, 44) und der thermischen Benachrichtiger-Ausgabevorrichtung (36) verbunden ist, wobei der Prozessor (40) konfiguriert ist zum Empfangen einer Nachricht (410) an der tragbaren elektronischen Vorrichtung (20); Bestimmen, in Reaktion auf das Empfangen der Nachricht, einer Benachrichtigungseinstellung (415) aus der Vielzahl von Benachrichtigungsseinstellungen; Erzeugen eines thermischen Benachrichtigungssignals (420) an der thermischen Benachrichtiger-Ausgabevorrichtung (36) gemäß der bestimmten Benachrichtigungseinstellung, wobei das thermische Benachrichtigungssignal eine nicht-visuelle Identifizierung eines Absenders der empfangenen Nachricht liefert; und Erzeugen zumindest eines anderen Benachrichtigungssignals gemäß der bestimmten Benachrichtigungseinstellung.

8. Tragbare elektronische Vorrichtung (20) gemäß Anspruch 7, wobei die thermische Benachrichtiger-Ausgabevorrichtung (36) einen Teil einer externen Oberfläche (38) der tragbaren elektronischen Vorrichtung (20) einnimmt.

9. Tragbare elektronische Vorrichtung (20) gemäß einem der Ansprüche 7 bis 8, wobei das thermische Benachrichtigungssignal aufweist:
Erhöhen der Temperatur von zumindest einem Teil der thermischen Benachrichtiger-Ausgabevorrichtung (36) über eine Umgebungstemperatur; oder
Verringern der Temperatur von zumindest einem Teil der thermischen Benachrichtiger-Ausgabevorrichtung (36) unter eine Umgebungstemperatur.

10. Tragbare elektronische Vorrichtung (20) gemäß einem der Ansprüche 7 bis 9, wobei der Prozessor (40) weiter konfiguriert ist zu m Empfangen (410), vor dem Erzeugen des thermischen Benachrichtigungssignals, eines Absender-Identifizierers, der mit der Nachricht assoziiert ist.

11. Tragbare elektronische Vorrichtung (20) gemäß Anspruch 10, wobei der Prozessor (40) weiter konfiguriert ist zum Erzeugen des thermischen Benachrichtigungssignals an der thermischen Benachrichtiger-Ausgabevorrichtung (36) gemäß der bestimmten Benachrichtigungseinstellung und dem Absender-Identifizierer.

12. Tragbare elektronische Vorrichtung (20) gemäß einem der Ansprüche 7 bis 11, wobei der Prozessor (40) weiter konfiguriert ist zum Beenden eines Erzeugens des thermischen Benachrichtigungssignals nach einer vorgegebenen Zeitdauer.

13. Computerlesbares Speichermedium (42, 44), das computerlesbare Programmierungsanweisungen speichert, die von einem Prozessor (40) einer elektronischen Vorrichtung (20) ausführbar sind, um die elektronische Vorrichtung zu veranlassen, die Schritte des Verfahrens gemäß einem der Ansprüche 1 bis 6 zu implementieren.

## Revendications

1. Procédé de gestion de notifications de messages dans un dispositif électronique portable (20) comportant un dispositif de sortie d'élément de notification thermique (36), le procécé comprenant :
le maintien d'une pluralité de paramètres de notification (58) dans le dispositif électronique portable ;
la réception d'un message (410) dans le dispositif électronique portable (20) ;
la détermination, en réponse à la réception du message, d'un paramètre de notification (415) parmi la pluralité de paramètres de notification ;
la génération d'un signal de notification thermique (420) dans le dispositif de sortie d'élément de notification thermique (36) en fonction du paramètre de notification détermine, le signal de notification thermique délivrant une identification non visuelle d'un expéditeur du message reçu ; et
la génération d'au moins un autre signal de notification en fonction du paramètre de notification déterminé.

2. Procédé selon la revendication 1, dans lequel le dispositif de sortie d'élément de notification thermique (36) occupe une partie d'une surface extérieure (38) du dispositif électronique portable (20).

3. Procédé selon l'une quelconque des revendication 1 à 2, dans lequel le signal de notification thermique comprend :
l'augmentation de la température d'au moins une partie du dispositif de sortie d'élément de notification thermique (36) au-dessus d'une température ambiante ; ou
la diminution de la température d'au moins une partie du dispositif de sortie d'élément de notification thermique (36) en dessous d'une température ambiante.

4. Procédé selon l'une quelconque des revendications 1 à 3, comprenant de plus :
la réception (410), avant la génération du signal de notification thermique, d'un identifiant d'expéditeur associé au message.

5. Procédé selon la revendication 4, comprenant la génération du signal de notification thermique dans le dispositif de sortie d'élément de notification thermique en fonction du paramètre de notification déterminé et de l'identifiant d'expéditeur.

6. Procédé selon l'une quelconque des revendications 1 à 5, comprenant de plus :
l'arrêt de la génération du signal de notification thermique après une période de temps prédéterminée.

7. Dispositif électronique portable (20), comprenant :
une interface réseau (48) ;
une unité de mémorisation (42, 44) configurée de façon à maintenir une pluralité de paramètres de notification (58) ;
un dispositif de sortie d'élément de notification thermique (36) ; et
un professeur (40) interconnecté à l'interface réseau (48), à l'unité de mémorisation (42, 44) et au dispositif de sortie d'élément de notification thermique (36), le processeur (40) étant configuré pour recevoir un message (410) dans le dispositif électronique portable (20) ; pour déterminer, en réponse à la réception du message, un paramètre de notification (415) parmi la pluralité de paramètre de notification ; pour générer un signal de notification thermique (420) dans le dispositif de sortie d'élément de notification thermique (36) en fonction du paramètre de notification déterminé, le signal de notification thermique délivrant une identification non visuelle d'un expéditeur du message reçu ; et pour générer au moins un autre signal de notification en fonction du signal de notification déterminé.

8. Dispositif électronique portable (20) selon la revendication 7, dans lequel le dispositif de sortie d'élément de notification thermique (36) occupe une partie d'une surface extérieure (38) du dispositif électronique portable (20).

9. Dispositif électronique portable (20) selon l'une quelconque des revendications 7 à 8, dans lequel le signal de notification thermique comprend :
l'augmentation de la température d'au moins une partie du dispositif de sortie d'élément de notification thermique (36) au-dessus d'une température ambiante ; ou
la diminution de la température d'au moins une partie du dispositif de sortie d'élément de notification thermique (36) en dessous d'une température ambiante.

10. Dispositif électronique portable (20) selon l'une quelconque des revendications 7 à 9, dans lequel le processeur (40) est de plus configuré pour recevoir (410), avant la génération du signal de notification thermique, un identifiant d'expéditeur associé au message.

11. Dispositif électronique portable (20) selon la revendication 10, dans lequel le processeur (40) est de plus configuré pour générer le signal de notification thermique dans le dispositif de sortie d'élément de notification thermique (36) en fonction du paramètre de notification déterminé et de l'identifiant d'expéditeur.

12. Dispositif électronique portable (20) selon l'une quelconque des revendications 7 à 11, dans lequel le processeur (40) est de plus configuré pour arrêter la génération du signal de notification thermique après une période de temps prédéterminée.

13. Support de mémorisation lisible par ordinateur (42, 44) mémorisant des instructions de programmation lisibles par ordinateur, exécutables par un processeur (40) d'un dispositif électronique (20) affin d'amener le dispositif électronique à mettre en oeuvre les étapes du procédé selon l'une quelconque des revendications 1 à 6.
